# EUROPÄISCHE PATENTSCHRIFT

(11) **EP 4 322 885 B1**
(45) Veröffentlichungstag und Bekanntmachung des Hinweises auf die Patenterteilung: **02.04.2025**
(21) Anmeldenummer: 22706230.4
(22) Anmeldetag: 14.02.2022
(51) Int. Cl.: A61C 7/08, B29C 51/08, B29C 51/36

(54) **VERFAHREN ZUM TRENNEN EINES TIEFZIEHMODELLS VON EINER FOLIE**
METHOD FOR SEPARATING A THERMOFORMING MODEL FROM A FILM
MÉTHODE DE SÉPARATION D'UN MODÈLE DE THERMOFORMAGE D'UN FILM

(30) Priorität: 12.04.2021 AT 502682021
(43) Veröffentlichungstag der Anmeldung: 21.02.2024
(73) Patentinhaber: Dental Manufacturing Unit GmbH, 5412 Puch bei Hallein (AT)
(72) Erfinder: HUBER, Martin, 5452 Pfarrwerfen (AT); WÖRMER-AIGMÜLLER, Alfons, 5500 Bischofshofen (AT)
(74) Vertreter: Hübscher & Partner Patentanwälte GmbH
(86) Internationale Anmeldenummer: PCT/AT2022/060043
(87) Internationale Veröffentlichungsnummer: WO 2022/217297

(56) Entgegenhaltungen:
- WO-A1-2018/118200
- US-A1- 2019 343 602

## Beschreibung

### Technisches Gebiet

Die Erfindung bezieht sich auf ein Verfahren zum Trennen eines dentalen Tiefziehmodells von einer Tiefziehfolie.

### Stand der Technik

Aus dem Stand der Technik ist es bekannt, Zahnschienen zur Korrektur von Zahnfehlstellungen zu verwenden. Um eine solche Zahnschiene herzustellen, wird eine Tiefziehfolie über ein dreidimensionales dentales Tiefziehmodell, welches das korrigierte Patientengebiss repräsentiert, gezogen. Da das Gebiss des Patienten möglichst genau durch das Tiefziehmodell nachgebildet werden muss und die Zähne, das Zahnfleisch, sowie das Kiefer komplexe Oberflächen aufweisen, ergibt sich bei der Herstellung der Zahnschiene eine sehr große Interaktionsoberfläche und teilweise sogar Hinterschneidungen zwischen Tiefziehfolie und Tiefziehmodell, die in starker Adhäsion, bzw. sogar in einem Formschluss resultieren können. Dadurch wird das Lösen der gezogenen Tiefziehfolie vom Tiefziehmodell stark erschwert. Je nach der individuellen Form des Tiefziehmodells kann dies sogar dazu führen, dass sich die Tiefziehfolie nicht ohne Beschädigungen vom Tiefziehmodell lösen lässt. Zur Lösung des Problems wurde bereits vorgeschlagen (EP1686913A4), den Trennvorgang durch den Einsatz von Seife, Silikon oder Teflon zu erleichtern. Diese Hilfsmittel müssen allerdings vor der Verwendung der Zahnschiene durch chemische Behandlung wieder entfernt werden.

Die EP3544542A4 schlägt vor, einen in Tiefziehrichtung verlaufenden Kanal in dem Tiefziehmodell vorzusehen. Die aus der Tiefziehfolie hergestellte Zahnschiene formt einen sich verjüngenden Stopfen aus, der in diesen Kanal verklemmt ist. Nach dem Tiefziehen wird dieser Stopfen mit Hilfe eines Werkzeugs aus dem Kanal gedrückt, wodurch sich die Zahnschiene vom Tiefziehmodell löst.

Nachteilig am Stand der Technik ist allerdings, dass sowohl das Tiefziehmodell als auch die Tiefziehfolie in ihrer Beschaffenheit modifiziert werden müssen, um die beiden Komponenten voneinander zu lösen. Da der Kanal durch das Tiefziehmodell verlaufen muss, kann das zu modellierende Gebiss zumindest an dieser Stelle auch nicht präzise nachgebildet werden. Außerdem muss der Stopfen nach dem Trennen von der Tiefziehfolie geschnitten und diese entgratet werden. Das größte Problem besteht allerdings darin, dass die notwendigen Kräfte nur an einer Stelle appliziert werden können, wodurch tendenziell höhere Trennkräfte benötigt werden. Je nach individueller Form des Tiefziehmodells lassen sich manche Zahnschienen durch eine solche punktuelle Applikation der Kraft an einer standardisierten Stelle allerdings gar nicht, oder nicht beschädigungsfrei lösen.

WO 2018/118200 A1 und US 2019/343602 A1 werden als relevanter Stand der Technik zitiert.

### Darstellung der Erfindung

Der Erfindung liegt somit die Aufgabe zugrunde, ein Verfahren aufzuzeigen, mit dem eine Tiefziehfolie trotz der auftretenden hohen Adhäsionskräfte bzw. dem Formschluss beschädigungsfrei von einem dentalen Tiefziehmodell gelöst werden kann, ohne die beteiligten Komponenten chemisch zu modifizieren oder mechanisch zu bearbeiten.

Die Erfindung löst die gestellte Aufgabe dadurch, dass am Tiefziehmodell wenigstens ein, abschnittsweise zwischen dem Tiefziehmodell und der Tiefziehfolie verlaufendes Zugmittel, welches einen Anschlag für einen Abzieher umfasst, angeordnet wird, dass das Tiefziehmodell mit der Tiefziehfolie über einer Entnahmeöffnung, deren Rand eine Anschlagsbegrenzung für den freien Tiefziehrand der Tiefziehfolie bildet, positioniert wird und anschließend ein verlagerbarer Abzieher in eine Eingriffsstellung gebracht wird, in der der Abzieher in den Anschlag des Zugmittels eingreift und über diese Eingriffsstellung hinaus in eine Entnahmestellung verlagert wird, in der das Tiefziehmodell durch die Entnahmeöffnung aus der Tiefziehfolie gezogen wird. Der Abzieher greift in der Eingriffsstellung zwar in den Anschlag des Zugmittels ein, übt jedoch noch keine Kraft auf das Tiefziehmodell aus. Erst während der Verlagerung von der Eingriffsin die Entnahmestellung wird über das Zugmittel eine Zugkraft auf das Tiefziehmodell ausgeübt. Die Zugkraft ist in Durchzugsrichtung quer zu der von der Entnahmeöffnung aufgespannten Ebene gerichtet. Der freie Tiefziehrand der Tiefziehfolie ist der Bereich, welcher in Eingriffsstellung im Wesentlichen parallel zur Entnahmeöffnung verläuft, und keine Kontaktoberfläche zum Tiefziehmodell ausbildet. Da der Durchmesser der Tiefziehfolie aufgrund des freien Tiefziehrandes größer ist als der des Tiefziehmodells, bildet der Rand der Entnahmeöffnung lediglich für die Tiefziehfolie eine Anschlagsbegrenzung, allerdings nicht für das Tiefziehmodell. Wird also die Zugkraft auf das Tiefziehmodell appliziert, wird das Tiefziehmodell durch die Entnahmeöffnung aus der Tiefziehfolie gezogen, wobei die Tiefziehfolie unverändert auf der Anschlagsbegrenzung ruht. In einer bevorzugten Ausführungsform bewirkt die Zugkraft eine leichte Krümmung der Tiefziehfolie in Zugrichtung, sodass sich am Angriffspunkt der Kraft ein dem Abzieher zugewandter Scheitelpunkt ausbildet. Dies erleichtert das Trennen, bewirkt aber kein vollständiges Eintreten der Tiefziehfolie in die Entnahmeöffnung. Als Zugmittel kann beispielsweise ein teilweise zwischen dem Tiefziehmodell und der Tiefziehfolie verlaufendes Ringband um das Tiefziehmodell gelegt werden, dass eine herabhängende Schlaufe ausbildet, in die ein Haken als Abzieher eingreifen und die Zugkraft auf das Tiefziehmodell applizieren kann. In einer besonders bevorzugten Ausführungsform umfasst das Zugmittel wenigstens ein Band und eine Lagerplattform, wobei die Zugkraft des Abziehers über die Lagerplattform auf das Band und von dort auf das Tiefziehmodell appliziert wird.

Um das Zugmittel einfach und reversibel zwischen dem Tiefziehmodell und der Tiefziehfolie anzuordnen, wird vorgeschlagen, dass wenigstens ein Abschnitt des Zugmittels vor dem Tiefziehen der Tiefziehfolie am dentalen Tiefziehmodell angeordnet wird. So kann das Tiefziehmodell zuerst mit dem Zugmittel versehen und anschließend die Tiefziehfolie darübergezogen werden. Dies ermöglicht nicht nur eine einfache Anordnung des Zugmittels, sondern befestigt das Zugmittel gleichermaßen stabil und reversibel am Tiefziehmodell und ermöglicht ein einfaches Lösen nach dem Trennen.

Die zum Trennen benötigte Kraft kann reduziert werden, indem wenigstens ein Abschnitt des Zugmittels im Bereich der beiden Endabschnitte des Tiefziehmodells angeordnet wird. Da das Tiefziehmodell im Wesentlichen U-förmig ist, formt das Tiefziehmodell zwei Schenkel aus, die sich im Wesentlichen von den Backen- zu den Eckzähnen des Tiefziehmodells erstrecken. Wird das Zugmittel im Bereich der beiden Endabschnitte, also im Bereich der hinteren Backenzähne, angeordnet, wirken diese Schenkel bei Ausübung einer Zugkraft in Zugrichtung als Hebel mit einem im Bereich der Schneidzahnmodelle liegenden Angelpunkt. Das Tiefziehmodell führt daher unter Einfluss der Zugkraft eine Rotationsbewegung aus, die das Lösen des Tiefziehmodells von der Tiefziehfolie erleichtert.

Wird das Zugmittel zwischen Tiefziehfolie und Tiefziehmodell angeordnet, kann dies die Form der Tiefziehfolie beeinflussen, da die Tiefziehfolie beim Tiefziehen der Kontur des Zugmittels folgt. Dies bewirkt eine Abweichung der Ist-Form der gebildeten Zahnschiene von der Soll-Form. Die Einflussnahme des Zugmittels auf die Form der Tiefziehfolie kann allerdings minimiert werden, wenn wenigstens ein Abschnitt des Zugmittels zwischen zwei Zähnen des Tiefziehmodells angeordnet wird. So können die natürlich auftretenden Zahnzwischenräume bzw. Senken zwischen den Zähnen genutzt werden um dort das Zugmittel anzuordnen, sodass das Zugmittel keine unerwünschten Konturen erzeugt. Dadurch werden Erhebungen, die den Tragekomfort oder die Funktionalität der aus der Tiefziehfolie hergestellten Zahnschiene beeinträchtigen abhängig von der Zahnform und -stellung vermieden bzw. minimiert.

Eine weitere Maßnahme um den Einfluss des Zugmittels auf die Form der aus der Tiefziehfolie hergestellten Zahnschiene zu minimieren liegt darin, dass das Zugmittel ein hinsichtlich seines Querschnittes forminstabiles Band umfasst. Die Forminstabilität wird dabei so gewählt, dass das Zugmittel zwischen Tiefziehmodell und Tiefziehfolie einer möglichst geringen Querschnittsfläche aufweist, sich möglichst flach zwischen dem Tiefziehmodell und der Tiefziehfolie anordnen lässt und daher möglichst geringen Einfluss auf die Kontur der Zahnschiene nimmt. Das forminstabile Band kann beispielsweise ein Kevlarband sein. In einer bevorzugten Ausführungsform ist das Zugmittel wiederverwendbar.

Die Erfindung bezieht sich auch auf eine Vorrichtung zum Trennen eines dentalen Tiefziehmodells von einer Tiefziehfolie, gekennzeichnet durch eine Trennplattform, die eine Entnahmeöffnung aufweist, deren Rand eine Anschlagsbegrenzung für den freien Tiefziehrand der Tiefziehfolie bildet, und einen an der der Anschlagsbegrenzung abgewandten Seite der Trennplattform angeordneten, von einer Eingriffs- in eine Entnahmestellung verlagerbaren Abzieher zum Eingriff in einen von einem auf dem Tiefziehmodell angeordneten Zugmittel gebildeten Anschlag aufweist. Die Trennplattform kann beispielsweise eine Metall- oder Hartplastikplatte mit einer als Entnahmeöffnung dienenden Ausnehmung sein. Dabei muss der Durchmesser der Entnahmeöffnung größer als die größte Weite des Tiefziehmodells, aber kleiner als der größte Durchmesser der Tiefziehfolie sein, sodass der Rand der Entnahmeöffnung die Anschlagsbegrenzung für den freien Tiefziehrand bildet. Der Abzieher ist an der der Anschlagsbegrenzung abgewandten Seite der Trennplattform angeordnet und bewegt sich bei der Verlagerung von der Eingriffs- in die Entnahmestellung von der Entnahmeöffnung in Durchzugsrichtung weg. Nach dem Trennen kann die auf der Trennplattform ruhende Tiefziehfolie entfernt und das Tiefziehmodell aus der Entnahmeöffnung entnommen werden.

Der Abzieher kann einfacher in die Eingriffsstellung und von dort einfacher in die Entnahmestellung verlagert werden, wenn Abzieher an einer parallel zu einer von der Entnahmeöffnung aufgespannten Ebene verlaufenden Drehachse gelagert ist . Zufolge dieser Maßnahmen führt der Abzieher bei seiner Verlagerung eine Drehbewegung aus, wobei die Drehachse innerhalb oder außerhalb des Abziehers liegen kann, deren Bewegung in eine horizontale Komponente parallel zur Trennplattform und eine vertikale Komponente orthogonal zur Trennplattform zerlegt werden kann. Bei geeigneter Dimensionierung des Abziehers ermöglicht die horizontale Komponente ein einfacheres Eingreifen des Abziehers in den Anschlag in der Eingriffsstellung ohne dass das Tiefziehmodell samt Tiefziehfolie auf der Trennplattform verschoben werden muss. Sobald die Eingriffsstellung erreicht wurde, kann durch einfaches Weiterbewegen des Abziehers die Entnahmestellung erreicht werden, da aufgrund der vertikalen Komponente der Drehbewegung des Abziehers die zum Trennen nötige Zugkraft appliziert werden kann.

Die aufzubringende Trennkraft kann trotz der großen Adhäsion verringert werden, wenn der Rand der Entnahmeöffnung anschlagsbegrenzungsseitig kegelstumpfförmig ist. Der Rand der Entnahmeöffnung bildet nur auf der Fläche, an denen die Tiefziehfolie aufliegt eine Anschlagsbegrenzung. Durch die Umfangsmantelfläche des Kegelstumpfes bildet sich zwischen der Tiefziehfolie und der Trennplattform ein Freiraum, dessen Höhe in Richtung des Zentrums der Entnahmeöffnung zunimmt. Appliziert der Abzieher über den Anschlag die Zugkraft auf das Tiefziehmodell, wird die Tiefziehfolie aufgrund der wirkenden Adhäsion in Zugrichtung in den Freiraum gezogen, was eine elastische Aufweitung der Tiefziehfolie und damit ein einfacheres Trennen bewirkt.

Um die zum Trennen benötigte Zugkraft leichter manuell aufzubringen, kann der Abzieher an einem um die Drehachse bewegbaren Hebel angesetzt sein. Besonders benutzerfreundliche Betriebsbedingungen ergeben sich dabei, wenn der Hebel über ein parallel zur Längsachse des Hebels verlaufendes Langloch an der Drehachse gelagert ist, da dadurch der Eingriff des Abziehers in den vom Zugmittel gebildeten Anschlag erleichtert wird.

Damit das Tiefziehmodell nach dem Trennen leicht aus der Vorrichtung entnommen werden kann, wird vorgeschlagen, dass die Entnahmeöffnung eine Aufnahme für eine dem Abzieher in Zugrichtung nachgelagerte Lagerplattform mit wenigstens einer Durchbruch als Durchtrittsöffnung für ein Band bildet. In Eingriffsstellung ragt das Band durch die von der Entnahmeöffnung aufgenommenen Lagerplattform. Wird das Tiefziehmodell beim Verlagern von der Eingriffsstellung in die Entnahmestellung aus der Tiefziehfolie gelöst, befindet es sich auf der Lagerplattform und kann von dort nach Entfernen der Tiefziehfolie über die Entnahmeöffnung entnommen werden. Die Lagerplattformkann beispielsweise aus Metall oder Plastik sein.

### Kurze Beschreibung der Erfindung

In der Zeichnung ist der Erfindungsgegenstand beispielsweise dargestellt. Es zeigen
- Fig. 1: einen schematischen Schnitt durch eine Ausführungsform der erfindungsgemäßen Vorrichtung und ein Tiefziehmodell samt Tiefziehfolie und Zugmittel,
- Fig. 2: einen der Fig. 1 entsprechenden Schnitt in Eingriffsstellung,
- Fig. 3: einen der Fig. 2 entsprechenden Schnitt in Entnahmestellung und
- Fig. 4: einen Schnitt durch weitere Ausführungsform der erfindungsgemäßen Vorrichtung mit stilisiertem Tiefziehmodell samt Tiefziehfolie.

### Wege zur Ausführung der Erfindung

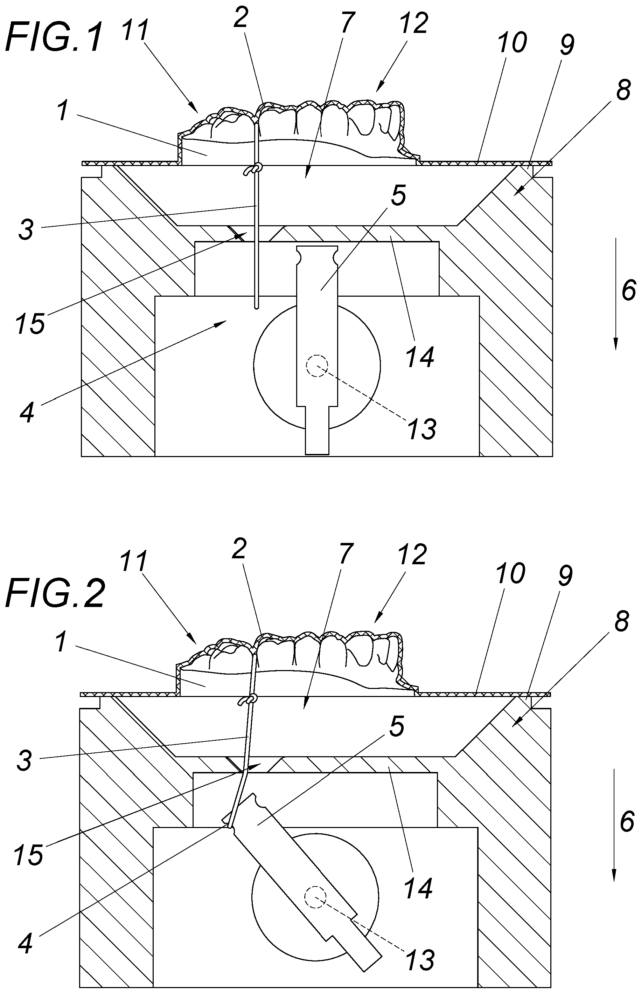

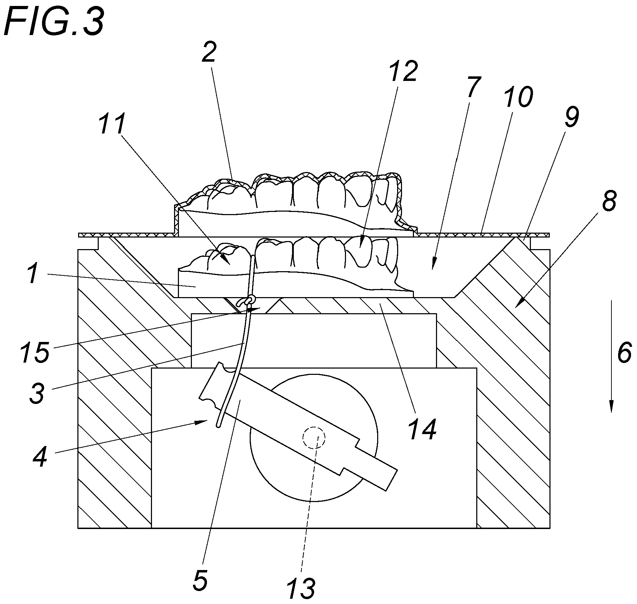

Bei einem erfindungsgemäßen Verfahren zum Trennen eines dentalen Tiefziehmodells 1 von einer eine Zahnschiene bildenden Tiefziehfolie 2 wird zuerst ein Zugmittel 3 zwischen Tiefziehmodell 1 und Tiefziehschiene 2 angeordnet. Wird dabei vor dem Tiefziehen das Zugmittel 3 auf dem Tiefziehmodell 1 angeordnet und erst anschließend die Tiefziehfolie 2 über das Tiefziehmodell 1 gezogen, umschließt die Tiefziehfolie 2 das Zugmittel 3 teilweise, sodass auf weitere Befestigungsmittel verzichtet werden kann. Alternativ oder zusätzlich kann das Zugmittel 3 beispielsweise auf dem Tiefziehmodell 1 verknotet werden. Das Zugmittel 3 bildet einen Anschlag 4 in den ein Abzieher 5 eingreifen kann. Dieser Abzieher 5 ist von einer in der Fig. 2 dargestellten Eingriffsstellung, in der der Abzieher 5 in den Anschlag 4 des Zugmittels 3 eingreift, ohne Zugkraft auf das Tiefziehmodell 1 auszuüben, in eine Entnahmestellung, bei der Tiefziehmodell 1 und Tiefziehfolie 2 getrennt wurden, verlagerbar, die in Fig. 3 dargestellt ist.

Während der Verlagerung von der Eingriffs- in die Entnahmestellung übt der Abzieher 5 über den Anschlag 4 des Zugmittels 3 eine Zugkraft zum Lösen des Tiefziehmodells 1 von der Tiefziehfolie 2 aus und zieht das Tiefziehmodell 1 in Durchzugsrichtung 6 aus der Tiefziehfolie 2. Dabei sei angemerkt, dass die Durchzugsrichtung 6 nicht exakt mit der Richtung des Kraftvektors der vom Abzieher 5 über den Anschlag 4 auf das Tiefziehmodell 1 applizierten Kraft übereinstimmen muss, um das Tiefziehmodell 1 aus der Tiefziehfolie 2 zu ziehen, sondern je nach Wirkrichtung und Anordnung des Abziehers 5 variieren kann. Wichtig ist dabei lediglich, dass die applizierte Kraftkomponente in Durchzugsrichtung 6 groß genug ist, um das Tiefziehmodell 1 von der Tiefziehfolie 2 zu lösen. Sobald sich das Tiefziehmodell 1 aufgrund der applizierten Zugkraft von der Tiefziehfolie 2 löst, fällt das Tiefziehmodell 1 durch die Entnahmeöffnung 7 einer Trennplattform 8. Da der Rand 9 der Entnahmeöffnung 7 der Trennplattform 8 eine Anschlagsbegrenzung für den freien Tiefziehrand 10 der Tiefziehfolie 2 bildet, wird die Tiefziehfolie 2 nicht mitgezogen, sondern ruht weiterhin auf dem Rand 9. Das Trennen wird erleichtert, wenn der Rand 9 der Entnahmeöffnung 7 kegelstumpfförmig ist. Dadurch wird bei der Applikation der Zugkraft auf das Tiefziehmodell 1 die Tiefziehfolie 2 in den durch den Kegelstumpf entstehenden Freiraum gezogen und lateral, also parallel zur Entnahmeöffnung 7, reversibel aufgeweitet, wodurch sich das Tiefziehmodell 1 leichter von der Tiefziehfolie 2 löst.

Das Trennen des Tiefziehmodells 1 von der Tiefziehfolie 2 kann durch einige weitere Schritte optimiert und die Qualität der aus der Tiefziehfolie 2 hergestellten Zahnschiene verbessert werden. So kann beispielsweise wenigstens ein Abschnitt des Zugmittels 3 im Bereich der Endabschnitte 11 des Tiefziehmodells 1 angeordnet werden, um die Zugkraft über die Endabschnitte 11, die als Hebel mit einem Angriffspunkt im Bereich 12 der Schneidezähne des Tiefziehmodells 1 fungieren, zu applizieren. Wie in den Figs. 1 bis 3 dargestellt, kann wenigstens ein Abschnitt des Zugmittels 3 zwischen zwei Zähnen des Tiefziehmodells 1 verlaufen, damit das Zugmittel 3 die Kontur der Tiefziehfolie 2 nicht beeinflusst. Zum selben Zweck das Zugmittel 3 ein forminstabiles Band umfassen, dessen Querschnittsfläche zwischen Tiefziehmodell 1 und Tiefziehfolie 2 möglichst gering ist.

Zum Applizieren der Zugkraft kann der Abzieher 5 an einer parallel zur Entnahmeöffnung 7 verlaufenden Drehachse 13 gelagert sein. Dies hat den Vorteil, dass der Benutzer den Abzieher nur in eine Richtung verlagern muss, um den Abzieher 5 sowohl in die Eingriffs-, als auch die Entnahmestellung zu bringen. Darüber hinaus erleichtert die Drehbewegung den Eingriff des Abziehers 5 in den Anschlag 4 des Zugmittels 3. Damit nach dem Trennen das Tiefziehmodell 1 nicht auf den Abzieher 5 fällt und leichter entnommen werden kann, kann zwischen dem Abzieher 5 und der Entnahmeöffnung 7 eine Lagerplattform 14 mit wenigstens einem Durchbruch 15 für ein Band vorgesehen sein. Das Band wird durch die Durchtrittsöffnung 15 geführt, deren Durchmesser kleiner als die größte Weite des Tiefziehmodells 1 ist, aber hinreichend groß, damit das Band durch sie durchgeführt werden kann und für den Abzieher 5 zugänglich ist.

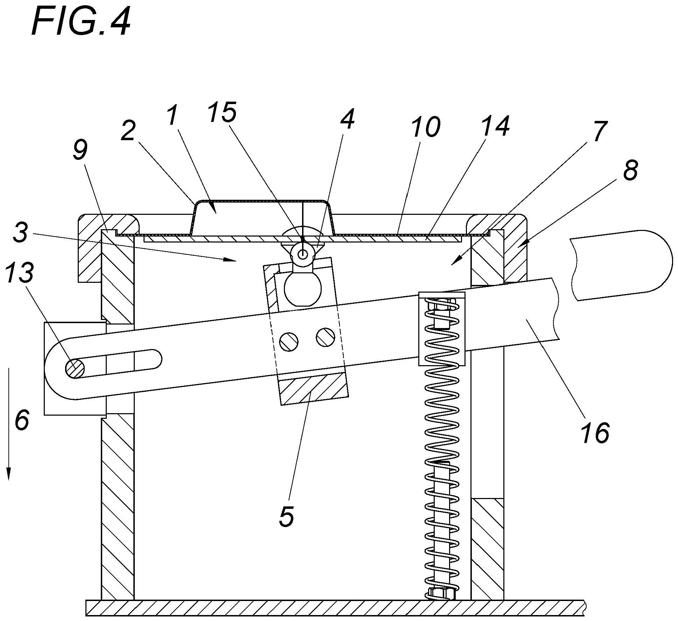

Fig. 4 zeigt eine weiter Ausführungsform der erfindungsgemäßen Vorrichtung, bei dem der Abzieher 5 die Zugkraft in Zugrichtung 6 über die Lagerplattform 14 appliziert. Dabei wird das Tiefziehmodell 1 samt Tiefziehfolie 2 auf der Lagerplattform 14 angeordnet, beide Enden des Bandes durch unterschiedliche Durchbrüche 15 der Lagerplattform 14 geführt und an der dem Tiefziehmodell 1 abgewandten Seite entweder direkt verknotet oder indirekt aneinander befestigt, um den Bereich der Lagerplattform 14 zwischen den Durchbrüchen 15 ringförmig zu umfassen. Der Abzieher 5 greift dabei an der Lagerplattform 14 an und zieht diese nach unten, bis die Lagerplattform 14 das Band spannt. Eine weitere Verlagerung des Abziehers 5 in Entnahmestellung bewirkt eine Zugkraft in Zugrichtung 6, die das Tiefziehmodell 1 aus der Tiefziehfolie 2 löst. Zum einfacheren Herstellen der Eingriffsstellung kann der Hebel 16 ein Langloch aufweisen, in das die Drehachse 13 eingreift. Dadurch kann der Abzieher 5 einfacher in radialer Richtung verlagert und mit dem Anschlag 4 in Eingriff gebracht werden.

## Patentansprüche

1. Verfahren zum Trennen eines dentalen Tiefziehmodells (1) von einer Tiefziehfolie (2), **dadurch gekennzeichnet, dass** am Tiefziehmodell (1) wenigstens ein, abschnittsweise zwischen dem Tiefziehmodell (1) und der Tiefziehfolie (2) verlaufendes Zugmittel (3), welches einen Anschlag (4) für einen Abzieher (5) umfasst, angeordnet wird, dass das Tiefziehmodell (1) mit der Tiefziehfolie (2) über einer Entnahmeöffnung (7), deren Rand (9) eine Anschlagsbegrenzung für den freien Tiefziehrand (10) der Tiefziehfolie (2) bildet, positioniert wird und anschließend ein verlagerbarer Abzieher (5) in eine Eingriffsstellung gebracht wird, in der der Abzieher (5) in den Anschlag des Zugmittels (3) eingreift und über diese Eingriffsstellung hinaus in eine Entnahmestellung verlagert wird, in der das Tiefziehmodell (1) durch die Entnahmeöffnung (7) aus der Tiefziehfolie (2) gezogen wird.

2. Verfahren nach Anspruch 1, **dadurch gekennzeichnet, dass** wenigstens ein Abschnitt des Zugmittels (3) vor dem Tiefziehen der Tiefziehfolie (2) am dentalen Tiefziehmodell (1) angeordnet wird.

3. Verfahren nach Anspruch 1 oder 2, **dadurch gekennzeichnet, dass** wenigstens ein Abschnitt des Zugmittels (3) im Bereich der beiden Endabschnitte (11) des Tiefziehmodells (1) angeordnet wird.

4. Verfahren nach Anspruch 1 bis 3, **dadurch gekennzeichnet, dass** wenigstens ein Abschnitt des Zugmittels (3) zwischen zwei Zähnen des Tiefziehmodells (1) angeordnet wird.

5. Verfahren nach einem der Ansprüche 1 bis 4, **dadurch gekennzeichnet, dass** das Zugmittel (3) ein hinsichtlich seines Querschnittes forminstabiles Band umfasst.

6. Vorrichtung zum Trennen eines dentalen Tiefziehmodells (1) von einer Tiefziehfolie (2), **gekennzeichnet durch** eine Trennplattform (8), die eine Entnahmeöffnung (7) aufweist, deren Rand (9) eine Anschlagsbegrenzung für einen freien Tiefziehrand (10) der Tiefziehfolie (2) bildet, und einen an der der Anschlagsbegrenzung abgewandten Seite der Trennplattform (8) angeordneten, von einer Eingriffs- in eine Entnahmestellung verlagerbaren Abzieher (5) zum Eingriff in einen von einem auf dem Tiefziehmodell (1) angeordneten Zugmittel (3) gebildeten Anschlag (4) aufweist.

7. Vorrichtung nach Anspruch 6, **dadurch gekennzeichnet, dass** der Abzieher (5) an einer parallel zu einer von der Entnahmeöffnung (7) aufgespannten Ebene verlaufenden Drehachse (13) gelagert ist.

8. Vorrichtung nach Anspruch 6 oder 7, **dadurch gekennzeichnet, dass** der Rand (9) der Entnahmeöffnung (7) anschlagsbegrenzungsseitig kegelstumpfförmig ist.

9. Vorrichtung nach einem der Ansprüche 7 oder 8, **dadurch gekennzeichnet, dass** der Abzieher (5) an einem um die Drehachse (13) bewegbaren Hebel (16) angesetzt ist.

10. Vorrichtung nach einem der Ansprüche 6 bis 9, **dadurch gekennzeichnet, dass** die Entnahmeöffnung (7) eine Aufnahme für eine dem Abzieher (5) in Zugrichtung (6) nachgelagerte Lagerplattform (14) mit wenigstens einem Durchbruch (15) für ein Band bildet.

## Claims

1. Method for separating a dental deep drawing model (1) from a deep drawing film (2), **characterized in that** at least one pulling means (3) which extends at least in sections between the deep drawing model (1) and the deep drawing film (2) and which comprises a stop (4) for a puller (5) is arranged on the deep drawing model (1), **in that** the deep drawing model (1) is positioned along with the deep drawing film (2) over a removal opening (7), the edge (9) of which forms a stop limit for the free deep drawing edge (10) of the deep drawing film (2), and then a movable puller (5) is brought into an engagement position, in which the puller (5) engages in the stop of the pulling means (3) and is moved beyond this engagement position into a removal position, in which the deep drawing model (1) is pulled out of the deep drawing film (2) through the removal opening (7).

2. Method according to claim 1, **characterized in that** at least one section of the pulling means (3) is arranged on the dental deep drawing model (1) before the deep drawing of the deep drawing film (2).

3. Method according to claim 1 or 2, **characterized in that** at least one section of the pulling means (3) is arranged in the region of the two end sections (11) of the deep drawing model (1).

4. Method according to claim 1 to 3, **characterized in that** at least one section of the pulling means (3) is arranged between two teeth of the deep drawing model (1).

5. Method according to one of claims 1 to 4, **characterized in that** the pulling means (3) comprises a tape which is dimensionally unstable in terms of its cross-section.

6. Device for separating a dental deep drawing model (1) from a deep drawing film (2), **characterized by** a separation platform (8) which has a removal opening (7), the edge (9) of which forms a stop limit for a free deep drawing edge (10) of the deep drawing film (2), and has a puller (5), arranged on the side of the separating platform (8) facing away from the stop limit and displaceable from an engagement position into a removal position, for engagement in a stop (4) formed by a pulling means (3) arranged on the deep drawing model (1).

7. Device according to claim 6, **characterized in that** the puller (5) is mounted on an axis of rotation (13) extending parallel to a plane defined by the removal opening (7).

8. Device according to claim 6 or 7, **characterized in that** the edge (9) of the removal opening (7) is frustoconical on the stop limit side.

9. Device according to one of claims 7 or 8, **characterized in that** the puller (5) is attached to a lever (16) that can be moved about the axis of rotation (13).

10. Device according to one of claims 6 to 9, **characterized in that** the removal opening (7) forms a receptacle for a bearing platform (14) located downstream of the puller (5) in the pulling direction (6), the platform (14) having at least one aperture (15) for a tape.

## Revendications

1. Procédé destiné à séparer un modèle de thermoformage dentaire (1) à partir d'un film de thermoformage (2), **caractérisé en ce que**, sur le modèle de thermoformage (1), est disposé au moins un moyen de traction (3) qui s'étend par sections entre le modèle de thermoformage (1) et le film de thermoformage (2) et qui comprend une butée (4) pour un moyen de démoulage (5), **en ce que** le modèle de thermoformage (1) est positionné avec le film de thermoformage (2) sur une ouverture de prélèvement (7) dont le bord (9) forme une délimitation de butée pour le bord libre de thermoformage (10) du film de thermoformage (2), puis un moyen de démoulage déplaçable (5) est amené dans une position d'engrènement, dans laquelle le moyen de démoulage (5) s'engrène dans la butée du moyen de traction (3) et est déplacé, par le biais de cette position d'engrènement, dans une position de prélèvement où le modèle de thermoformage (1) est tiré à partir du film de thermoformage (2) à travers l'ouverture de prélèvement (7).

2. Procédé selon la revendication 1, **caractérisé en ce qu'**au moins une section du moyen de traction (3) est disposée sur le modèle de thermoformage dentaire (1) avant le thermoformage du film de thermoformage (2).

3. Procédé selon la revendication 1 ou 2, **caractérisé en ce qu'**au moins une section du moyen de traction (3) est disposée au niveau des deux sections d'extrémité (11) du modèle de thermoformage (1).

4. Procédé selon la revendication 1 à 3, **caractérisé en ce qu'**au moins une section du moyen de traction (3) est disposée entre deux dents du modèle de thermoformage (1).

5. Procédé selon une des revendications 1 à 4, **caractérisé en ce que** le moyen de traction (3) comprend une bande dimensionnellement instable par rapport à sa section transversale.

6. Dispositif destiné à séparer un modèle de thermoformage dentaire (1) à partir d'un film de thermoformage (2), **caractérisé par** une plate-forme de séparation (8), qui présente une ouverture de prélèvement (7) dont le bord (9) forme une délimitation de butée pour un bord libre de thermoformage (10) du film de thermoformage (2), ainsi qu'un moyen de démoulage d'engrènement (5) disposé sur le côté de la plate-forme de séparation (8) opposé à la délimitation de butée et déplaçable dans une position de prélèvement pour s'engrener dans une butée (4) formée par un moyen de traction (3) disposé sur le modèle de thermoformage (1).

7. Dispositif selon la revendication 6, **caractérisé en ce que** le moyen de démoulage (5) est monté sur un axe de rotation (13) s'étendant parallèlement à un plan traversé par l'ouverture de prélèvement (7).

8. Dispositif selon la revendication 6 ou 7, **caractérisé en ce que** le bord (9) de l'ouverture de prélèvement (7) est tronconique du côté de la délimitation de butée.

9. Dispositif selon une des revendications 7 ou 8, **caractérisé en ce que** le moyen de démoulage (5) est fixé à un levier (16) mobile autour de l'axe de rotation (13).

10. Dispositif selon une des revendications 6 à 9, **caractérisé en ce que** l'ouverture de prélèvement (7) forme un logement pour une plateforme de stockage (14) disposée en aval du moyen de démoulage (5) dans la direction de traction (6) et comprenant au moins une perforation (15) pour une bande.
